# FASCICULE DE BREVET EUROPEEN

(11) **EP 3 743 778 B1**
(45) Date de publication et mention de la délivrance du brevet: **09.08.2023**
(21) Numéro de dépôt: 19700972.3
(22) Date de dépôt: 24.01.2019
(51) Int. Cl.: G08G 5/00, G05B 23/02, G05B 19/042

(54) **AUGMENTATION DES PERFORMANCES D'ÉQUIPEMENTS ÉLECTRONIQUES**
LEISTUNGSVERBESSERUNG VON ELEKTRONISCHEN VORRICHTUNGEN
ENHANCING THE PERFORMANCE OF ELECTRONIC DEVICES

(30) Priorité: 25.01.2018 FR 1800084
(43) Date de publication de la demande: 02.12.2020
(73) Titulaire: THALES, 92400 Courbevoie (FR)
(72) Inventeur: LETELLIER, Benoît, 92622 GENNEVILLIERS CEDEX (FR); CHARLOT, Sébastien, 92622 GENNEVILLIERS CEDEX (FR); GUYOT, Jonathan, 92622 GENNEVILLIERS CEDEX (FR); LAMY-BERGOT, Catherine, 92622 GENNEVILLIERS CEDEX (FR); LYS, Sébastien, 92622 GENNEVILLIERS CEDEX (FR); DUBANT, Jean-Denis, 92622 GENNEVILLIERS CEDEX (FR)
(74) Mandataire: Lavoix
(86) Numéro de dépôt international: PCT/EP2019/051766
(87) Numéro de publication internationale: WO 2019/145432

(56) Documents cités:
- DE-A1- 10 222 187
- DE-A1-102016 109 497
- FR-A1- 3 006 785
- US-A1- 2010 318 246

## Description

La présente invention concerne un procédé d'augmentation des performances d'un équipement électronique et un équipement électronique ayant des performances augmentées associé.

L'invention se situe dans le domaine de l'amélioration des performances des équipements électroniques, en particulier des équipements de communications, d'identification, de navigation, utilisables dans des systèmes embarqués sur des porteurs en mouvement, ou communiquant avec de tels porteurs.

Elle trouve des applications particulières dans les domaines de contrôle et pilotage d'aéronefs par exemple, ou et plus généralement dans les systèmes d'analyse de situation embarqués dans des plateformes mobiles telles que navires, sous-marins, avions d'armes, hélicoptères, avions de surveillance, véhicules blindés ...

Les équipements électroniques concernés sont en particulier les équipements de radio-communications (émetteurs, récepteurs et émetteurs/récepteurs), de radionavigation (par exemple des radioaltimètres), d'identification, de guerre-électronique et les radars. Ces équipements sont aussi classiquement appelés senseurs dans la littérature.

De manière connue, les équipements du type précité sont équipés de fonctions d'autotest basiques, qui fournissent en sortie une autorisation d'utilisation ou une défense d'utilisation (états de type « GO » ou « NO GO »), sans fournir d'informations complémentaires. L'utilisation de telles fonctions d'autotest permet d'assurer un certain niveau de sécurité en prohibant l'utilisation d'un équipement qui présente un dysfonctionnement, sans généralement toutefois permettre à un opérateur du système utilisant l'équipement de connaître les raisons du dysfonctionnement détecté, et sans stocker les détails associés. Par conséquent, ce type de méthode ne permet pas d'améliorer les performances d'un équipement ou le contrôle du système qui utilise l'équipement.

Il est également connu d'effectuer de la maintenance prédictive pour des équipements du type précité. Pour ce faire, des données de fonctionnement sont recueillies, en lien avec, par exemple, la durée d'utilisation, les écarts de température lors des utilisations ou une quantité de vibrations du porteur. Cela permet ensuite de calculer des statistiques de fonctionnement et des probabilités de panne. La maintenance prédictive consiste alors à remplacer des équipements en fonction de ces probabilités de panne, avant qu'une défaillance de l'équipement survienne. Ce type de maintenance est adapté notamment pour des composants mécaniques, pour lesquels les contraintes d'utilisation induisent une usure prévisible.

Le document US 2010/318246 A1 décrit un procédé de détermination de durée de fonctionnement restante d'un composant de véhicule ferroviaire soumis à des pressions mécaniques.

Le document DE 102 22 187 A1 se situe dans le domaine des véhicules automobiles et décrit une méthode de prévision de la durée de vie d'un composant de véhicule automobile.

Le document DE 10 2016 109497 A1 décrit une méthode de détermination d'usure de composant d'un véhicule ferroviaire.

Le document FR3006785 montre l'utilisation d'une cartographie permettant d'obtenir l'état de dégradation d'un aéronef ou d'un de ses moteurs afin d'anticiper des opérations de maintenance.

Cependant, il a été observé que ce type de maintenance est moins adapté pour des composants électroniques, qui peuvent présenter des dysfonctionnements aléatoires.

L'invention a pour objectif de remédier aux inconvénients de l'état de la technique, en proposant des équipements électroniques du type précité ayant des capacités augmentées.

A cet effet, l'invention propose, selon un premier aspect, un équipement électronique ayant des performances augmentées comprenant au moins un processeur de calcul et au moins une unité de mémoire, selon la revendication 1.

Avantageusement, le fonctionnement de cet équipement électronique augmenté s'appuie sur la mémorisation et l'utilisation d'une cartographie de niveaux de fonctionnement en fonction d'au moins un paramètre représentatif d'une condition d'utilisation dudit équipement, qui permet d'alerter un opérateur de l'équipement de dysfonctionnements en lien avec des conditions ponctuelles d'utilisation, afin d'en adapter l'utilisation pour un fonctionnement optimisé.

L'équipement selon l'invention peut présenter une ou plusieurs des caractéristiques des revendications 2 à 5, prises indépendamment ou en combinaison, selon toutes les combinaisons techniquement acceptables.

Selon un deuxième aspect, l'invention concerne un procédé d'augmentation des performances d'un équipement électronique comprenant au moins un processeur de calcul et au moins une mémoire électronique, adapté à être embarqué sur un porteur, selon la revendication 6.

Le procédé d'augmentation des performances d'un équipement électronique selon l'invention peut présenter une ou plusieurs des caractéristiques des revendications 7 à 11, prises indépendamment ou en combinaison, selon toutes les combinaisons techniquement acceptables.

D'autres caractéristiques et avantages de l'invention ressortiront de la description qui en est donnée ci-dessous, à titre indicatif et nullement limitatif, en référence aux figures annexées, parmi lesquelles :
- la figure 1 est un schéma d'un système de contrôle et de pilotage selon un mode de réalisation de l'invention,
- la figure 2 est un logigramme des principales étapes d'un procédé de collecte de données de fonctionnement dans un mode de réalisation ;
- la figure 3 est un logigramme des principales étapes d'un procédé de génération de cartographie de niveaux de fonctionnement selon un mode de réalisation ;
- la figure 4 est une représentation schématique d'un exemple de cartographie des niveaux de fonctionnement ;
- la figure 5 est un logigramme des principales étapes d'un procédé d'augmentation des performances d'un équipement selon un mode de réalisation.

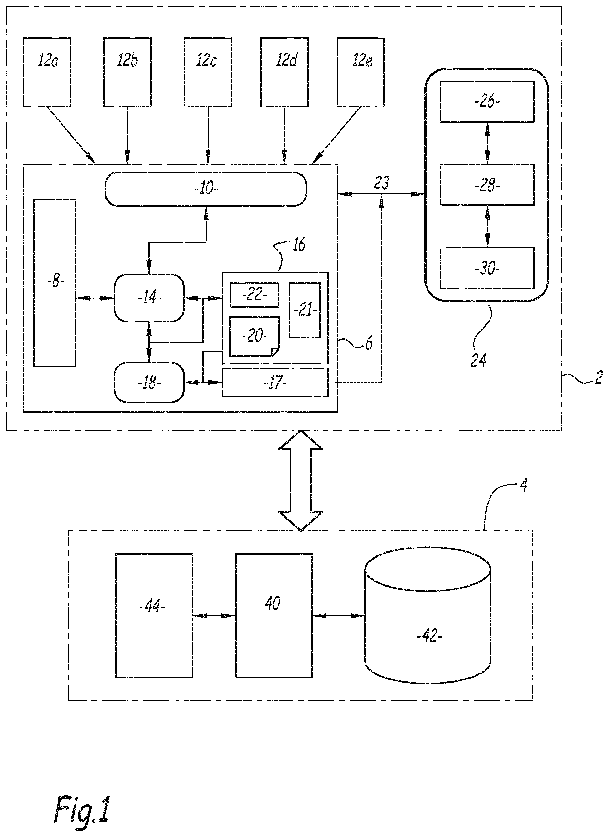

La figure 1 illustre schématiquement un système de contrôle et de pilotage 2 embarqué, adapté à communiquer par un moyen de communication, filaire ou sans fil, avec un système de calcul 4.

Dans un scénario d'application, le système de contrôle et de pilotage 2 est embarqué sur un porteur, par exemple un aéronef, non représenté, alors que le système de calcul 4 est situé dans une station de traitement centralisée, située sur une plateforme, par exemple au sol.

Dans le mode de réalisation représenté, le système de contrôle et de pilotage 2 comporte un équipement électronique 6 ayant des performances augmentées.

Bien entendu, un système de contrôle et de pilotage 2 peut comporter une pluralité de tels équipements.

Dans l'exemple représenté, l'équipement 6 est un équipement électronique comportant un module fonctionnel 8, comportant au moins un senseur, configuré pour réaliser une fonctionnalité donnée dudit équipement 6. Dans un mode de réalisation, le module fonctionnel 8 a une capacité de calcul et de communication propre, par exemple un processeur ou une carte électronique.

Dans un exemple d'application, le module 8 est un radioaltimètre comportant un émetteur/récepteur de signaux radioélectriques, permettant de mesurer une distance de l'équipement 6 par rapport à une surface survolée. Dans l'état de la technique, on connaît différents types de radioaltimètres, le principe général de tels équipements étant de mesurer la hauteur par rapport à la surface survolée en mesurant le temps de propagation de signaux radioélectrique émis et reçus après réflexion sur cette surface.

Dans un autre exemple d'application, le module 8 est un émetteur/récepteur de radio-communications, permettant d'établir un lien hertzien avec un ou plusieurs autres porteurs. Dans l'état de la technique, on connaît différents équipements mais aussi formes d'onde (ensemble des processus permettant de transmettre par une onde hertzienne des données), le principe général de tels équipements étant de moduler un signal pour l'émettre sous forme d'onde radio, selon un protocole et avec des protections (codage correcteur, évasion de fréquence, chiffrement ...) définis entre les différents acteurs de la communication.

L'invention s'applique plus généralement pour d'autres types d'équipements électroniques, ne comportant pas d'émetteur/récepteur de signal radioélectrique.

De plus, l'équipement 6 comporte une interface de communication 10 avec une pluralité de capteurs 12a, 12b, 12c, 12d, 12e qui font également partie du système 2 et sont adaptés à transmettre des informations à l'équipement 6 via l'interface 10.

Par exemple, l'interface de communication 10 est une interface de connexion filaire. En variante, il s'agit d'une interface de communication sans fil. Cette interface peut enfin être plurielle, certains capteurs étant connectés en sans fil, d'autres en filaire selon leurs capacités.

Dans un mode de réalisation, le capteur 12a est un capteur de géolocalisation implémentant un système de géolocalisation par satellite GNSS (« Global Navigation Satellite System »), adapté à estimer, à intervalles temporels réguliers, une information de géolocalisation dans un référentiel spatial donné. L'information de géolocalisation comprend par exemple une information de position spatiale, par exemple des coordonnées dans un référentiel 3D, et une information temporelle (date, heure), également appelée information d'horodatage.

Le capteur 12b est par exemple un capteur de température, adapté à fournir une valeur de mesure de température à proximité de l'équipement 6.

Le capteur 12c est par exemple un capteur d'hygrométrie, adapté à fournir une valeur de taux d'humidité à proximité de l'équipement 6, et le capteur 12d est par exemple un accéléromètre.

Le capteur 12e est par exemple un analyseur de spectre, permettant de découvrir l'environnement radio-électrique local dans une bande d'intérêt pour le système.

Bien entendu, la figure 1 est un exemple, un nombre supérieur ou inférieur de capteurs pouvant être utilisé.

Dans un mode de réalisation alternatif, les capteurs sont intégrés dans l'équipement 6. Typiquement, une fonction simple d'analyse de spectre peut être réalisée par la fonction de réception de l'équipement radio (lorsqu'il n'est pas utilisé par ailleurs, ou parfois en sus grâce à un traitement parallèle).

En complément des capteurs 12a à 12e, l'équipement 6 est en mesure d'auto-capter des informations internes de fonctionnement (ex : des hauteurs atypiques, des conditions de propagation ...) issues du module fonctionnel 8 ou unité de calcul 14 ou de label circulant sur les bus internes
L'équipement 6 comporte en outre un processeur de calcul 14, une unité de mémoire 16, une unité de communication 18 ainsi qu'un module cryptographique 17 pour sécuriser les informations stockées dans la mémoire et leur transmission.

En variante, ces unités sont réalisées sous forme de composants logiques programmables, tel qu'un FPGA (de l'anglais *Field-Programmable Gate Array*)*,* ou encore sous forme de circuits intégrés dédiés, de type ASIC (de l'anglais *Application-Specific Integrated Circuit).*

L'unité de communication est adaptée à communiquer, selon un protocole de communication adapté, avec le système de calcul 4.

Dans un mode de réalisation, l'unité de communication 18 est une unité de communication sans fil.

En variante, l'unité de communication 18 est une unité de communication filaire, par exemple permettant de mettre en oeuvre une connexion Ethernet.

La liaison de communication réalisée par l'unité de communication 18 est par exemple cryptée pour réaliser une communication sécurisée.

L'unité de mémoire 16 est adaptée à mémoriser notamment un journal de fonctionnement/dysfonctionnement 21, comportant notamment un rapport de dysfonctionnements ou pannes, enrichi d'informations transmises par les capteurs 12a à 12e, ainsi qu'une cartographie 20 de niveaux de fonctionnement en fonction d'au moins un paramètre représentatif d'une condition d'utilisation de l'équipement.

La cartographie 20 est l'élément principal permettant le fonctionnement augmenté de l'équipement. Elle est construite grâce au retour d'expérience du fonctionnement opérationnel des équipements puis, de préférence, chargée (et mise à jour) dans tous les équipements d'une même famille.

La génération et l'utilisation d'une telle cartographie 20 seront détaillées ci-après.

L'unité de mémoire 16 mémorise également plusieurs jeux 22 de paramètres de réglage pour commander le fonctionnement du module fonctionnel 8.

L'équipement 6 est également adapté à communiquer, par exemple en utilisant une connexion filaire 23, avec un ordinateur de bord 24, qui est schématiquement représenté à la figure 1.

Un tel ordinateur de bord comporte notamment une interface homme-machine 26, permettant de communiquer avec un opérateur, notamment pour lui permettre de commander les fonctionnalités mises en oeuvre par le(s) équipement(s) 6 embarqué(s) ainsi que de paramétrer les capteurs 12a à 12e associés.

L'ordinateur de bord comporte un calculateur électronique 28 et une unité de communication 30, adaptée à communiquer avec le système de calcul 4.

Dans un mode de réalisation, c'est l'ordinateur de bord qui centralise et gère toutes les communications avec le système de calcul 4, via l'unité de communication 30. Dans ce cas l'équipement 6 transmet toutes les informations à communiquer, notamment le journal de fonctionnement/dysfonctionnement 21, par exemple par une liaison de communication sécurisée, à l'ordinateur de bord 24.

De même que l'unité de communication 18, l'unité de communication 30 est une unité de communication sans fil dans un mode de réalisation. En variante, l'unité de communication 30 est une unité de communication filaire, par exemple permettant de mettre en oeuvre une connexion Ethernet. De préférence, la communication réalisée par l'unité de communication 30 est sécurisée. Par exemple, toutes les informations communiquées sont cryptés par le module cryptographique 17.

Le système de calcul 4, qui est par exemple situé dans une station de traitement centralisée comporte notamment un ou plusieurs serveurs de calcul 40 et une ou plusieurs unités de mémoire 42, adaptées à mémoriser de larges quantités de données numériques.

Le système de calcul 4 comporte également une unité de communication 44, adaptée à mettre en oeuvre le protocole de communication utilisé respectivement par les unités 18 ou 30.

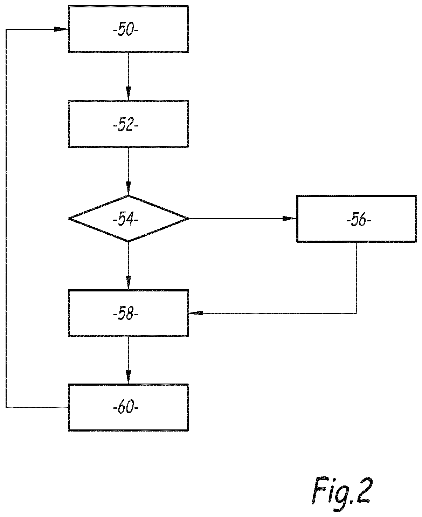

La figure 2 est un logigramme d'un procédé de collecte de données de fonctionnement utilisées pour la génération d'une cartographie de niveaux de fonctionnement, dans un mode de réalisation.

Comme expliqué en détail ci-après, les étapes 50 à 58 sont mises en oeuvre par un équipement électronique 6, et l'étape 60 est mise en oeuvre par un système de calcul 4.

Ce procédé est mis en oeuvre lors d'une phase préalable de test de l'équipement, mais peut également être mis en oeuvre lors d'une phase d'utilisation opérationnelle de l'équipement, permettant d'enrichir la cartographie des niveaux de fonctionnement.

Le procédé comporte une première étape 50 d'acquisition de données relatives au fonctionnement de l'équipement 6. Ces données comprennent d'une part des données horodatées relatives au fonctionnement du module 8 de l'équipement 6, y compris pannes ou défaillances, fournies par exemple par le système d'autotest de l'équipement 6, et d'autre part, des données reçues des capteurs 12a à 12e. Les données de fonctionnement sont par exemple des mesures d'altitude dans le cas d'un radioaltimètre, relevées à des intervalles de temps réguliers, ou encore des débits ou portées obtenues dans le cas d'un équipement de radio-communications, ou également des niveaux de brouillage local ou des types de canaux de propagation rencontrés.

Dans un mode de réalisation, les données de capteurs comprennent au moins une information de localisation, par exemple géographique et/ou temporelle.

Les données collectées sont regroupées à l'étape 52 dans un journal de fonctionnement/dysfonctionnement de l'équipement 6. Les éventuels dysfonctionnements ou pannes sont enregistrés, par exemple les résultats du système d'autotest mis en oeuvre par l'équipement. Le journal de fonctionnement/dysfonctionnement comprend également des informations temporelles, par exemple la date et l'heure associées à chaque donnée de fonctionnement, ainsi que des données issues des capteurs 12a à 12e qui pourront être corrélées avec les données de fonctionnement.

Ensuite, à l'étape 54 il est vérifié si les ressources de communication sont disponibles pour la transmission de données de fonctionnement. En effet, il est possible que les ressources de communication soient utilisées pour des tâches plus prioritaires, par exemple des tâches relatives au pilotage lorsque le procédé est mis en oeuvre à bord d'un aéronef.

En cas de réponse négative à l'étape de vérification 54, cette étape est suivie d'une étape de mémorisation 56 du journal de fonctionnement/dysfonctionnement pour une exploitation ultérieure.

En cas de réponse positive à l'étape 54, celle-ci est suivie d'une étape 58 de transmission du ou des journaux de fonctionnement contenant les données collectées par l'équipement 6 à un système de calcul 4.

Selon un mode de réalisation la transmission est effectuée par une communication radio, en utilisant des unités de communication adaptées.

En variante, la transmission est faite par une connexion filaire. Dans ce cas, la transmission est faite ultérieurement à l'acquisition des données, l'équipement étant dans ce cas directement connecté par une liaison filaire au système de calcul 4.

Le système de calcul reçoit le ou les journaux de fonctionnement/ dysfonctionnement, et les mémorise à l'étape 60.

Les étapes 50 à 60 sont répétées tout au long du fonctionnement de l'équipement 6.

Le système de calcul 4 est adapté à recevoir des données collectées par un même équipement sur plusieurs périodes temporelles, ainsi que des données collectées par plusieurs équipements d'une même famille d'équipements.

On appelle famille d'équipements un ensemble d'équipements ayant les mêmes spécifications techniques et comportant des composants similaires, par exemple des équipements d'une même gamme fournis par un fabricant.

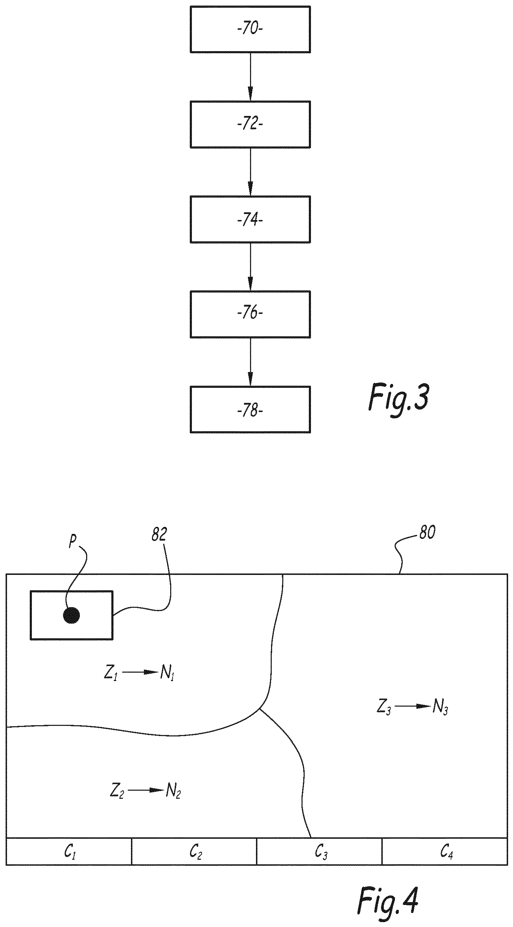

La figure 3 est un logigramme d'un procédé d'analyse de données relatives au fonctionnement des équipements collectées pour générer une cartographie de niveaux de fonctionnement, dans un mode de réalisation.

Les étapes de ce procédé sont mises en oeuvre par un système de calcul 4, ayant des capacités de calcul étendues, y compris si besoin pour le traitement de données massives.

En effet, les unités de mémoire 42 d'un système de calcul 4 mémorisent de très grandes quantités de données collectées, à partir d'un même équipement 6 ou d'une pluralité d'équipements d'une même famille d'équipements.

Le procédé d'analyse des données comporte, optionnellement, une étape 70 de réception et mémorisation de données supplémentaires.

Les données supplémentaires comportent, dans un mode de réalisation, des données d'environnement, par exemple des données météorologiques localisées. Ainsi, il est possible de corréler les données de fonctionnement considérées avec des conditions météorologiques, connaissant la date, l'heure et l'information de localisation spatiale associées aux données de fonctionnement mémorisées.

Les données d'environnement supplémentaires comportent par exemple des données géographiques, comme des données de relief. Enfin il peut s'agir de données de propagation radioélectrique obtenues par le calcul ou des mesures extérieures.

Ces données météorologiques et géographiques sont par exemple utiles pour caractériser le fonctionnement d'un radioaltimètre. Les données de propagation sont par exemple utiles pour caractériser le fonctionnement d'un émetteur/récepteur.

En effet, un radioaltimètre peut présenter des variations de mesures importantes lorsque le relief est très escarpé ou en présence d'éléments assez réfléchissants (à proximité de certains aéroports par exemple). Par rapport à une surface sans sur-sol, un radioaltimètre peut présenter une imprécision de mesure lorsque les conditions météorologiques sont très défavorables (les performances antennaires étant dégradées).

Ainsi, un équipement peut présenter un dysfonctionnement local à cause de conditions d'environnement sans présenter de défaillance d'un de ses composants. De même, dans le cas d'une communication radio, la présence d'un obstacle, d'un très bon réflecteur ou encore celle d'un brouilleur peuvent conduire à un dysfonctionnement local sans que cela ne corresponde à la défaillance de l'équipement ou d'un de ses composants.

Le gain de la cartographie des états de fonctionnement est de permettre d'identifier le passage dans les zones connues d'ambiguïté entre un dysfonctionnement liée à l'environnement ou un dysfonctionnement lié à l'équipement.

Les données supplémentaires peuvent comprendre en outre de la documentation technique, des données industrielles sur la fiabilité des composants d'un équipement.

L'étape 70 est suivie d'une étape 72 de traitement et d'analyse des données mémorisées, comprenant les données collectées et le cas échéant, les données supplémentaires, pour construire une cartographie de l'état de fonctionnement de l'équipement.

L'analyse de données est effectuée en utilisant des algorithmes d'analyse de données massive (en anglais « data analytics »). Par exemple, pour construire une cartographie de niveaux de fonctionnement, tous les moments de dysfonctionnement sont placés sur une carte géographique (en exploitant les résultats d'autotest par rapport à la position géographique) ou sur un calendrier (résultats d'autotest par rapport à un horodatage). Cela permet d'identifier la cartographie des zones ou des moments temporels où les performances de l'équipement ne seront pas nominales. D'autres conditions, par exemple météorologiques, sont corrélées avec la cartographie des zones ou des moments temporels. Le système en ce cas permettra de discriminer un non fonctionnement lié à un problème de l'équipement ou d'un de ses composants ou d'un problème externe. Dans un mode de réalisation, le système fournit à l'avance une information de la durée/zone où le fonctionnement sera perturbé (ou a minima une information de contexte devant permettre à un opérateur d'estimer cette durée/zone).

Le traitement et l'analyse des données de l'étape 72 permettent de déterminer à l'étape 74 une pluralité de K niveaux de fonctionnement, comportant au moins un niveau de fonctionnement nominal et un niveau de fonctionnement dégradé par rapport au niveau de fonctionnement nominal. De plus, il est également envisagé que les niveaux de fonctionnement comprennent un ou plusieurs niveaux de fonctionnement optimisés par rapport au niveau de fonctionnement nominal.

Le niveau nominal est un niveau pour lequel l'équipement fournit des résultats satisfaisants, par exemple présentant une précision de mesure avec un premier taux d'erreur prédéterminé.

Un niveau dégradé correspond à une précision de mesure ayant un deuxième taux d'erreur supérieur au premier taux d'erreur prédéterminé.

Un niveau amélioré correspond à une précision de mesure ayant un troisième taux d'erreur inférieur au premier taux d'erreur prédéterminé

A titre d'exemple non limitatif, on considère K=3 niveaux de fonctionnement, par exemple un premier niveau N₁ de fonctionnement nominal, un deuxième niveau N₂ dans lequel la précision de mesure de l'équipement est dégradée comme expliqué ci-dessus et un troisième niveau de fonctionnement N₃ très fortement dégradé.

Une cartographie de niveaux de fonctionnement en fonction de plusieurs paramètres représentatifs de conditions d'utilisation est ensuite générée à l'étape 76.

La cartographie distingue des zones, en fonction de leur localisation dans l'espace des paramètres représentatifs de conditions d'utilisation, chaque zone ayant un niveau de fonctionnement associé pour un ensemble de conditions d'utilisation donné.

Dans un mode de réalisation, les zones sont positionnées en fonction de leur localisation géographique.

Cependant, il est à noter que les zones de fonctionnement définies dans la cartographie ne sont pas nécessairement des zones géographiques, mais des zones définies en fonction des valeurs ou de plages de valeurs du ou des paramètres représentatifs d'une condition d'utilisation choisis (ex : temporelle...). Les zones peuvent aussi varier avec l'environnement au sens large (météo, environnement radio-électrique ...).

La cartographie générée est ensuite exploitée (étape 78) pour améliorer les performances de l'équipement ou des équipements de la famille d'équipements considérés, par réinjection dans les équipements.

A titre d'exemple schématique une cartographie 80 de niveaux de fonctionnement est illustrée à la figure 4.

La cartographie 80 correspond à une zone, par exemple géographique, donnée et comporte un découpage en zone géographiques, chaque point P d'une zone représenté ayant des coordonnées spatiales dans un référentiel de géolocalisation. La cartographie représentée schématiquement à la figure 4 est bidimensionnelle, mais en variante les points sont représentés dans un référentiel tridimensionnel ou d'ordre supérieur.

Chaque zone représentée Z₁, Z₂, Z₃ a un niveau de fonctionnement associé, par exemple le niveau N₁ pour la zone Z₁, le niveau N₂ pour la zone Z₂ et le niveau N₃ pour la zone Z₃, lorsque les paramètres définissant des conditions d'utilisation prédéterminées prennent des valeurs respectives C₁, C₂, C₃, C₄.

En cas de changement de conditions d'utilisation, le découpage en zones peut être modifié.

Par exemple, la zone géographique considérée est quadrillée en pavés élémentaires 82, et pour chaque pavé, un niveau de fonctionnement associé en fonction de valeurs de chaque condition d'utilisation est mémorisé.

La taille d'un pavé élémentaire est variable et choisie en fonction par exemple des fonctionnalités de l'équipement et du type de paramètres représentatifs de conditions d'environnement.

Par exemple, lorsque la condition d'utilisation est la « température », des niveaux de fonctionnement en fonction de plages de température sont distingués.

De même, lorsque la condition d'utilisation est météorologique, on distingue par exemple des niveaux de fonctionnement en fonction de conditions telles que pluies de différentes intensités, neige ou temps sec.

Une fonction de détermination de niveau de fonctionnement permet de calculer, à partir de plusieurs valeurs de paramètres associés aux conditions d'utilisation, un niveau de fonctionnement pour chaque pavé élémentaire.

Par exemple, la fonction de détermination de niveau de fonctionnement sélectionne le niveau de fonctionnement le plus dégradé parmi les niveaux de fonctionnement associés aux valeurs respectives C₁, C₂, C₃, C₄ pour un pavé 82 donné.

De multiples utilisations d'une telle cartographie sont possibles.

Par exemple, la cartographie est utilisable pour planifier un itinéraire nécessitant l'utilisation d'un équipement donné. En effet, s'il est constaté que le niveau de fonctionnement de l'équipement est dégradé dans une zone géographique donnée, un itinéraire évitant la zone géographique concernée peut être prévu.

De manière générale, à chaque instant, un événement peut être comparé avec le contenu de la cartographie, afin d'anticiper la prise en compte de cet événement.

Par exemple, la cartographie permet d'alerter un opérateur en temps réel des niveaux de fonctionnement en cours et à venir d'un équipement, ainsi que des causes du niveau de fonctionnement, nominal, dégradé ou amélioré, de l'équipement, pour permettre une prise de décision adéquate.

Dans un mode de réalisation, l'étape 78 consiste à transmettre la cartographie de niveaux de fonctionnement à l'équipement 6, en utilisant le protocole de communication sans fil permettant de communiquer entre le système de calcul 4 et l'équipement 6. Ceci ayant pour objectif de permettre un fonctionnement encore plus performant de l'équipement 6.

En variante, la transmission de la cartographie de niveaux de fonctionnement est effectuée via une liaison filaire lors d'une phase de maintenance.

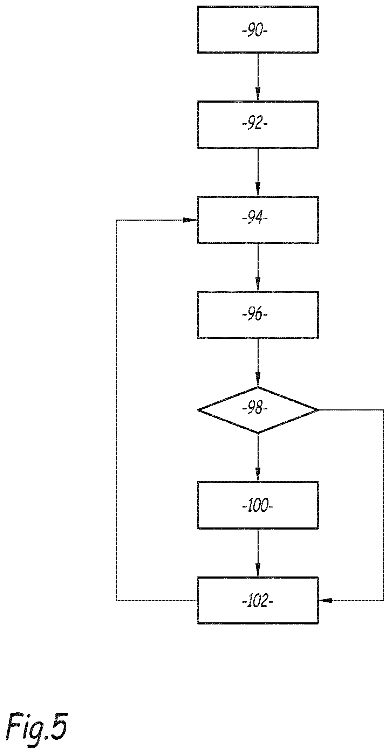

La figure 5 est un logigramme d'un procédé d'augmentation des performances d'un équipement dans un mode de réalisation.

Ce procédé est mis en oeuvre par l'équipement 6.

En variante, le procédé est mis en oeuvre par un ordinateur de bord d'un système de contrôle et de pilotage embarqué sur le porteur sur lequel l'équipement est embarqué.

Lors d'une première étape 90, l'équipement reçoit et mémorise la cartographie des niveaux de fonctionnement précédemment calculée par un système de calcul, soit pour cet équipement spécifiquement, soit pour la famille d'équipements.

L'étape 90 est suivie d'une étape 92 d'obtention de jeux de paramètres de réglage de l'équipement pour chaque niveau de fonctionnement.

Un jeu de paramètres de réglage associé à un niveau de fonctionnement donné est un ensemble de paramètres définissant des réglages de l'équipement qui sont choisis pour maximiser la capacité de fonctionnement de l'équipement par rapport au niveau de fonctionnement donné.

Dans un mode de réalisation, les jeux de paramètres de réglage sont transmis en même temps que la cartographie des niveaux de fonctionnement.

En variante, les jeux de paramètres de réglage sont calculés par l'équipement, ou mémorisés dans l'équipement préalablement, par exemple lors de la fabrication.

L'étape 92 est suivie d'une étape 94 de récupération de valeurs de paramètres représentatifs de conditions d'utilisation, permettant ensuite d'exploiter la cartographie de niveaux de fonctionnement préalablement enregistrée.

Par exemple, en cours de déplacement du porteur, il s'agit de paramètres de géolocalisation, de température, d'hygrométrie, fournis par des capteurs 12a à 12e installés à bord du porteur.

De plus, d'autres paramètres comme des paramètres d'environnement (par exemple météorologiques ou géographiques) sont fournis.

Les valeurs des paramètres obtenues définissent les conditions d'utilisation courantes.

La cartographie des niveaux de fonctionnement, préalablement reçue et mémorisée, est utilisée ensuite à l'étape 96 pour déterminer le niveau de fonctionnement de l'équipement, en fonction des conditions d'utilisation. Lorsqu'un paramètre de géolocalisation a été utilisé pour construire la cartographie, l'information de position géographique d'utilisation de l'équipement est également utilisée.

Lorsque le porteur est en déplacement, le niveau de fonctionnement déterminé est le niveau courant.

Il est ensuite vérifié à l'étape 98 si le niveau de fonctionnement courant est le niveau nominal.

Si le niveau de fonctionnement est nominal, l'étape 98 est suivie d'une étape 102 décrite ci-dessous.

Si le niveau est un niveau dégradé, l'étape 98 est suivie d'une étape 100 consistant à émettre une alerte, de préférence accompagnée d'un rapport détaillant les conditions d'utilisation et le niveau de fonctionnement.

L'alerte peut être émise sur une interface homme-machine de l'équipement, ou transmise au système de contrôle et de pilotage de bord pour exploitation. Typiquement, l'alerte est destinée à un opérateur pour prise de décision. Cette remontée d'alerte peut être un complément vers l'opérateur ou le système leur fournissant cette information augmentée, en sus d'une information habituelle éventuellement répondant à des exigences de sûreté de fonctionnement. En ce cas, c'est bien à l'opérateur ou au système de décider du comportement face à ces remontées potentiellement incohérentes

Le système de contrôle et de pilotage transmet l'alerte à l'opérateur ou effectue une action de prise de mesure préventive, par exemple le déclenchement d'autres équipements, une modification des puissances émises ou une modification d'itinéraire.

Ainsi, un niveau de fonctionnement dégradé est pris en compte dynamiquement en temps réel pour améliorer le contrôle et le pilotage.

De même, il est possible d'afficher une alerte de dysfonctionnement temporaire dans une zone donnée, et d'informer l'opérateur des raisons d'un tel dysfonctionnement temporaire. Par exemple, le dysfonctionnement temporaire peut être localisé spatialement ou dû à une perturbation météorologique, sans défaillance d'un composant matériel de l'équipement. Dans ce cas, l'opérateur a une information claire et, dans certaines situations opérationnelles, peut ignorer l'alerte. Avantageusement, l'équipement peut être ré-utilisé après sortie d'une zone de fonctionnement dégradé.

Si le niveau de fonctionnement déterminé est un niveau amélioré (supérieur à la qualité nécessaire telle qu'estimée soit par définition, soit par action opérateur), une information à destination de l'opérateur est affichée à l'étape 100. De préférence, l'information comprend un ou plusieurs paramètres de réglage permettant de faire fonctionner l'équipement avec un niveau de fonctionnement moins performant, pour économiser si besoin sa consommation électrique, son temps d'usage ou d'autres ressources utilisées par l'équipement. Cela est en particulier avantageux pour des équipements portables sur batterie.

L'étape 100 est suivie d'une étape 102 de mise à jour, le cas échéant, des paramètres de réglage de l'équipement en fonction du niveau de fonctionnement déterminé, qu'il s'agisse d'un niveau de fonctionnement dégradé, amélioré ou du niveau de fonctionnement nominal.

Ainsi, si plusieurs jeux de paramètres de réglage sont disponibles, l'utilisation de la cartographie permet d'appliquer les paramètres de réglage les plus adéquats en fonction du niveau de fonctionnement, afin d'optimiser la performance de fonctionnement de l'équipement, et notamment d'économiser des ressources. En variante, le choix d'appliquer d'autres paramètres de réglage est laissé à l'opérateur, après lui avoir fourni l'information de niveau de fonctionnement.

L'étape 102 est suivie de l'étape 94 préalablement décrite de valeurs de paramètres représentatifs de conditions d'utilisation.

En variante ou en complément, à l'étape 98, le niveau de fonctionnement déterminé est comparé à l'état de fonctionnement indiqué par l'autotest de l'équipement. Cela permet avantageusement à l'opérateur de gérer toute alerte levée par l'autotest grâce aux informations complémentaires relatives aux conditions d'utilisation, et d'ignorer, le cas échéant, une alerte temporaire.

Il est à noter que le procédé décrit ci-dessus s'applique également pour une modification dynamique d'itinéraire par un système de contrôle et de pilotage en cours de déplacement du porteur.

En effet, les conditions d'utilisation, notamment les conditions d'environnement, sur un itinéraire préalablement prévu peuvent être anticipées, par exemple par des prévisions météorologiques lorsque cette condition d'environnement affecte le niveau de fonctionnement de l'équipement.

Il est alors possible d'estimer, à partir de la cartographie des niveaux de fonctionnement mémorisée, les niveaux de fonctionnement prévus pour une portion ultérieure de l'itinéraire, en fonction de conditions d'environnement prédites, et de modifier l'itinéraire si cela est possible, pour éviter des zones de niveau de fonctionnement d'équipement dégradé ou pour chercher des zones de niveau de fonctionnement supérieur.
ou dû à une perturbation météorologique, sans défaillance d'un composant matériel de l'équipement. Dans ce cas, l'opérateur a une information claire et, dans certaines situations opérationnelles, peut ignorer l'alerte. Avantageusement, l'équipement peut être ré-utilisé après sortie d'une zone de fonctionnement dégradé.

Si le niveau de fonctionnement déterminé est un niveau amélioré (supérieur à la qualité nécessaire telle qu'estimée soit par définition, soit par action opérateur), une information à destination de l'opérateur est affichée à l'étape 100. De préférence, l'information comprend un ou plusieurs paramètres de réglage permettant de faire fonctionner l'équipement avec un niveau de fonctionnement moins performant, pour économiser si besoin sa consommation électrique, son temps d'usage ou d'autres ressources utilisées par l'équipement. Cela est en particulier avantageux pour des équipements portables sur batterie.

L'étape 100 est suivie d'une étape 102 de mise à jour, le cas échéant, des paramètres de réglage de l'équipement en fonction du niveau de fonctionnement déterminé, qu'il s'agisse d'un niveau de fonctionnement dégradé, amélioré ou du niveau de fonctionnement nominal.

Ainsi, si plusieurs jeux de paramètres de réglage sont disponibles, l'utilisation de la cartographie permet d'appliquer les paramètres de réglage les plus adéquats en fonction du niveau de fonctionnement, afin d'optimiser la performance de fonctionnement de l'équipement, et notamment d'économiser des ressources. En variante, le choix d'appliquer d'autres paramètres de réglage est laissé à l'opérateur, après lui avoir fourni l'information de niveau de fonctionnement.

L'étape 102 est suivie de l'étape 94 préalablement décrite de valeurs de paramètres représentatifs de conditions d'utilisation.

En variante ou en complément, à l'étape 98, le niveau de fonctionnement déterminé est comparé à l'état de fonctionnement indiqué par l'autotest de l'équipement. Cela permet avantageusement à l'opérateur de gérer toute alerte levée par l'autotest grâce aux informations complémentaires relatives aux conditions d'utilisation, et d'ignorer, le cas échéant, une alerte temporaire.

Il est à noter que le procédé décrit ci-dessus s'applique également pour une modification dynamique d'itinéraire par un système de contrôle et de pilotage en cours de déplacement du porteur.

En effet, les conditions d'utilisation, notamment les conditions d'environnement, sur un itinéraire préalablement prévu peuvent être anticipées, par exemple par des prévisions météorologiques lorsque cette condition d'environnement affecte le niveau de fonctionnement de l'équipement.

Il est alors possible d'estimer, à partir de la cartographie des niveaux de fonctionnement mémorisée, les niveaux de fonctionnement prévus pour une portion ultérieure de l'itinéraire, en fonction de conditions d'environnement prédites, et de modifier l'itinéraire si cela est possible, pour éviter des zones de niveau de fonctionnement d'équipement dégradé ou pour chercher des zones de niveau de fonctionnement supérieur.

## Revendications

1. Equipement électronique ayant des performances augmentées comprenant au moins un processeur de calcul (14) et au moins une unité de mémoire (16), ledit équipement électronique étant adapté à être embarqué sur un porteur en mouvement, **caractérisé en ce qu'**il est adapté à mémoriser dans ladite unité de mémoire (16) une cartographie (20, 80) de niveaux de fonctionnement dudit équipement électronique, déterminée en fonction d'au moins un paramètre représentatif d'une condition d'utilisation dudit équipement,
la cartographie distinguant des zones de niveau de fonctionnement dans un espace des paramètres représentatifs de conditions d'utilisation dudit équipement,
les niveaux de fonctionnement comprenant un niveau de fonctionnement nominal, et au moins un niveau de fonctionnement dégradé par rapport au niveau nominal ou amélioré par rapport au niveau nominal,
ledit équipement électronique étant adapté pour :
- recevoir au moins une valeur de paramètre représentatif d'une condition d'utilisation dudit équipement,
- déterminer un niveau de fonctionnement dudit équipement à partir de ladite cartographie (20, 80) mémorisée et à partir de ladite au moins une valeur de paramètre représentatif d'une condition d'utilisation dudit équipement,
- si le niveau de fonctionnement déterminé est un niveau de fonctionnement dégradé, émettre une alerte, l'équipement étant en outre configuré pour obtenir un jeu de paramètres de réglage (22) dudit équipement associé au niveau de fonctionnement déterminé et appliquer dynamiquement ledit jeu de paramètres de réglage (22) audit équipement.

2. Equipement selon la revendication 1, dans lequel ledit paramètre est représentatif d'une information de géolocalisation et/ou d'une information d'horodatage et /ou d'une température d'utilisation et/ou d'une condition météorologique dans un environnement dudit équipement et/ou d'une durée de fonctionnement dudit équipement et/ou d'un environnement radio-électrique.

3. Equipement selon l'une quelconque des revendications 1 ou 2, adapté pour, si le niveau de fonctionnement déterminé est un niveau de fonctionnement amélioré, émettre une information indiquant au moins un paramètre de réglage permettant de faire fonctionner ledit équipement à un niveau de fonctionnement inférieur audit niveau de fonctionnement amélioré.

4. Equipement selon l'une quelconque des revendications 1 à 3, dans lequel ladite cartographie (20, 80) mémorisée est obtenue par traitement de données (21) obtenues à partir d'une pluralité d'équipements d'une même famille d'équipements.

5. Equipement selon l'une quelconque des revendications 1 à 4, adapté à transmettre de manière sécurisée à un système de calcul (4) un journal de fonctionnement/dysfonctionnement (21) comprenant des données de fonctionnement horodatées dudit équipement et des données collectées issues de capteurs (12a-12e) associés audit équipement.

6. Procédé d'augmentation des performances d'un équipement électronique comprenant au moins un processeur de calcul et au moins une mémoire électronique, adapté à être embarqué sur un porteur en mouvement, **caractérisé en ce qu'**il comporte une étape préalable de mémorisation (90) dans ladite mémoire de l'équipement électronique d'une cartographie (20, 80) de niveaux de fonctionnement dudit équipement électronique, déterminée en fonction d'au moins un paramètre représentatif d'une condition d'utilisation dudit équipement, la cartographie distinguant des zones de niveau de fonctionnement dans un espace des paramètres représentatifs de conditions d'utilisation dudit équipement,
les niveaux de fonctionnement comprenant un niveau de fonctionnement nominal et au moins un niveau de fonctionnement dégradé par rapport au niveau nominal ou amélioré par rapport au niveau nominal, et des étapes, exécutées par un processeur dudit équipement et consistant à :
- recevoir (94) au moins une valeur de paramètre représentatif d'une condition d'utilisation dudit équipement,
- déterminer (96) un niveau de fonctionnement dudit équipement, à partir de ladite cartographie (20, 80) mémorisée et partir de ladite au moins une valeur de paramètre représentatif d'une condition d'utilisation dudit équipement,
- si le niveau de fonctionnement déterminé est un niveau de fonctionnement dégradé, émettre (100) une alerte,
le procédé comportant en outre une étape consistant à obtenir et appliquer (102) un jeu de paramètres de réglage (22) dudit équipement associé au niveau de fonctionnement déterminé.

7. Procédé selon la revendication 6, comportant, si le niveau de fonctionnement déterminé est un niveau de fonctionnement amélioré, une émission (100) d'une information indiquant au moins un paramètre de réglage permettant de faire fonctionner ledit équipement à un niveau de fonctionnement inférieur audit niveau de fonctionnement amélioré.

8. Procédé selon l'une des revendications 6 ou 7 dans lequel plusieurs paramètres représentatifs de conditions d'utilisation définissent ladite cartographie (20, 80), et dans lequel l'étape de réception comprend la réception d'une information de position prédite par rapport à un itinéraire prévu et une valeur estimée de paramètre représentatif d'une condition d'utilisation associée audit itinéraire prévu pour ledit équipement, et suite à une émission d'alerte, une modification d'itinéraire est effectuée de manière à éviter un itinéraire traversant une zone de ladite cartographie correspondant à un niveau de fonctionnement dégradé.

9. Procédé selon l'une des revendications 6 à 8, comportant une étape de réception (90) d'une cartographie de niveaux de fonctionnement obtenue par un système de calcul adapté à traiter des données massives.

10. Procédé selon l'une des revendications 6 à 9, dans lequel ledit équipement appartient à une famille d'équipements, dans lequel ladite cartographie (20, 80) est obtenue (76) dans une étape préalable, par analyse et traitement (72, 74) de données comprenant des données de fonctionnement/dysfonctionnement (21) et des données issues de capteurs collectées (50, 52) par au moins un équipement de ladite famille d'équipements.

11. Procédé selon la revendication 10, dans lequel les données utilisées dans l'étape d'analyse et de traitement comprennent en outre des données supplémentaires d'environnement comprenant des données météorologiques et/ou des données géographiques et/ou des données d'environnement radioélectrique.

## Patentansprüche

1. Elektronische Ausrüstung, die erhöhte Leistung aufweist, umfassend mindestens einen Rechenprozessor (14) und mindestens eine Speichereinheit (16), wobei die elektronische Ausrüstung angepasst ist, um an Bord eines sich bewegenden Träger zu sein, **dadurch gekennzeichnet, dass** sie angepasst ist, um in der Speichereinheit (16) eine Kartografie (20, 80) von Funktionsebenen der elektronischen Ausrüstung zu speichern, die abhängig von mindestens einem Parameter bestimmt wird, der repräsentativ für eine Nutzungsbedingung der Ausrüstung ist,
wobei die Kartografie Zonen von Funktionsebenen in einem Raum von Parametern unterscheidet, die repräsentativ für die Nutzungsbedingungen der Ausrüstung sind,
wobei die Funktionsebenen eine nominale Funktionsebene und mindestens eine Funktionsebene umfassen, die gegenüber der nominalen Ebene verschlechtert oder gegenüber der nominalen Ebene verbessert ist,
wobei die elektronische Ausrüstung zu Folgendem angepasst ist:
- Empfangen mindestens eines Parameterwerts, der repräsentativ für einen Nutzungszustand der Ausrüstung ist,
- Bestimmen einer Funktionsebene der Ausrüstung anhand der gespeicherten Kartografie (20, 80) und anhand des mindestens einen Parameterwerts, der repräsentativ für einen Nutzungszustand der Ausrüstung ist,
- wenn die bestimmte Funktionsebene eine verschlechterte Funktionsebene ist, Ausgeben einer Warnung, wobei die Ausrüstung ferner konfiguriert ist, um einen Satz von Einstellparametern (22) der Ausrüstung zu erlangen, die mit der bestimmten Funktionsebene assoziiert ist, und dynamisches Anwenden den Satz von Einstellparametern (22) auf die Ausrüstung.

2. Ausrüstung nach Anspruch 1, wobei der Parameter repräsentativ für Geolokalisierungsinformationen und/oder Zeitstempelinformationen und/oder eine Nutzungstemperatur und/oder eine Wetterbedingung in einer Umgebung der Ausrüstung und/oder eine Betriebsdauer der Ausrüstung und/oder eine Funkumgebung ist.

3. Ausrüstung nach einem der Ansprüche 1 oder 2, die angepasst ist, um, wenn die bestimmte Funktionsebene eine verbesserte Funktionsebene ist, Informationen auszugeben, die mindestens einen Einstellparameter angeben, der es ermöglicht, die Ausrüstung auf einer Funktionsebene zu betreiben, die niedriger ist als die verbesserte Funktionsebene.

4. Ausrüstung nach einem der Ansprüche 1 bis 3, wobei die gespeicherte Kartographie (20, 80) durch die Verarbeitung von Daten (21) erlangt wird, die von einer Vielzahl von Ausrüstungen einer gleichen Ausrüstungsfamilie erlangt werden.

5. Ausrüstung nach einem der Ansprüche 1 bis 4, die angepasst ist, um auf sichere Weise ein Betriebs-/Störungsprotokoll (21) an ein Rechensystem (4) zu übertragen, umfassend zeitgestempelte Daten der Ausrüstung und Daten von Sensoren (12a-12e), die mit der Ausrüstung assoziiert sind.

6. Verfahren zum Erhöhen der Leistung einer elektronischen Ausrüstung, umfassend mindestens einen Rechenprozessor und mindestens einen elektronischen Speicher, das angepasst ist, um an Bord eines Trägers in Bewegung zu sein, **dadurch gekennzeichnet, dass** es einen vorherigen Schritt eines Speicherns (90) einer Kartografie (20, 80) von Funktionsebenen der elektronischen Ausrüstung in dem Speicher der elektronischen Ausrüstung umfasst, die abhängig von mindestens einem Parameter bestimmt wird, der repräsentativ für eine Nutzungsbedingung der Ausrüstung ist, wobei die Kartografie Bereiche von Funktionsebenen in einem Raum von Parametern unterscheidet, die repräsentativ für Nutzungsbedingungen der Ausrüstung sind,
wobei die Funktionsebenen eine nominale Funktionsebene und mindestens eine Funktionsebene umfassen, die gegenüber der nominalen Ebene verschlechtert oder gegenüber der nominalen Ebene verbessert ist, ausgeführt von einem Prozessor der Ausrüstung und bestehend aus:
- Empfangen (94) mindestens eines Parameterwerts, der repräsentativ für einen Nutzungszustand der Ausrüstung ist,
- Bestimmen (96) einer Funktionsebene der Ausrüstung anhand der gespeicherten Kartografie (20, 80) und anhand des mindestens einen Parameterwerts, der repräsentativ für einen Nutzungszustand der Ausrüstung ist,
- wenn die bestimmte Funktionsebene eine verschlechterte Funktionsebene ist, Ausgeben (100) einer Warnung,
das Verfahren ferner umfassend einen Schritt, der darin besteht, einen Satz von Einstellparametern (22) der Ausrüstung zu erlangen und anzuwenden (102), die mit der bestimmten Funktionsebene assoziiert sind.

7. Verfahren nach Anspruch 6, umfassend, wenn die bestimmte Funktionsebene eine verbesserte Funktionsebene ist, eine Ausgabe (100) von Informationen, die mindestens einen Einstellparameter angeben, der es ermöglicht, die Ausrüstung auf einer Funktionsebene zu betreiben, die niedriger ist als die verbesserte Funktionsebene.

8. Verfahren nach einem der Ansprüche 6 oder 7, bei dem mehrere Parameter, die repräsentativ für Nutzungsbedingungen sind, die Kartographie (20, 80) definieren, und wobei der Schritt eines Empfangens das Empfangen von Informationen über eine vorhergesagte Position in Bezug auf eine geplante Route und einen geschätzten Wert eines Parameters, der repräsentativ für einen Nutzungszustand ist, der mit der geplanten Route für die Ausrüstung assoziiert ist, und nach einer Ausgabe einer Warnung wird eine Routenänderung durchführt, um eine Route zu vermeiden, die durch einen Bereich der Kartographie verläuft, der einer verschlechterten Funktionsebene entspricht.

9. Verfahren nach einem der Ansprüche 6 bis 8, umfassend einen Schritt eines Empfangens (90) einer Kartographie von Funktionsebenen, die von einem Rechensystem erlangt werden, das zur Verarbeitung von Massendaten angepasst ist.

10. Verfahren nach einem der Ansprüche 6 bis 9, wobei die Ausrüstung zu einer Familie von Ausrüstungen gehört, wobei die Kartographie (20, 80) in einem vorherigen Schritt (76) erlangt wird, durch Analyse und Verarbeitung (72, 74) von Daten, die Funktions-/Fehlfunktionsdaten (21) und Daten von Sensoren umfassen, die von mindestens einer Ausrüstung der Ausrüstungsfamilie gesammelt (50, 52) werden.

11. Verfahren nach Anspruch 10, wobei die in dem Analyse- und Verarbeitungsschritt verwendeten Daten zusätzlich zusätzliche Umgebungsdaten umfassen, umfassend meteorologische Daten und/oder geografische Daten und/oder Funkumgebungsdaten.

## Claims

1. Electronic equipment having increased performance, comprising at least one computing processor (14) and at least one memory unit (16), said equipment being adapted to be placed on-board a moving carrier, **characterised in that** it is adapted to store in said memory unit (16) a map (20, 80) of levels of operation of said electronic equipment, determined based on at least one parameter that is representative of a condition of use of the equipment,
the cartography distinguishing areas having an associated level of operation in a space of parameters representative of conditions of use of said equipment,
the levels of operation comprising a nominal level of operation and at least one level of operation deteriorated with respect to the nominal level of operation improved with respect to the nominal level of operation,
said electronic equipment being adapted to:
- receive at least one parameter value that is representative of a condition of use of the equipment;
- determine a level of operation of said equipment, based on the stored map (20, 80) and on said at least one parameter value that is representative of a condition of use of the equipment;
- transmit an alert if the level of operation determined is a deteriorated level of operation, the equipment being further configured to obtain a set of setup parameters (22) of the equipment associated with the level of operation determined and to dynamically apply the set of setup parameters (22) to the equipment.

2. Equipment according to claim 1, wherein the parameter is representative of geolocation information and/or time-stamping information, and/or of a temperature of use, and/or a meteorological condition in an environment of the equipment, and/or a duration of operation of the equipment, and/or a radio environment.

3. Equipment according to any of claims 1 or 2, adapted to transmit information indicating at least one setup parameter allowing the equipment to be operated at a lower level of operation than the improved level of operation if the level of operation determined is an improved level of operation.

4. Equipment according to any of claims 1 to 3, wherein the map (20, 80) stored is obtained by processing data (21) obtained from a plurality of pieces of equipment of a same equipment family.

5. Equipment according to any of claims 1 to 4, adapted for secure transmission of an operation/malfunction log (21) comprising time-stamped operating data of the equipment and data collected from sensors (12a - 12e) associated with the equipment to a calculation system (4).

6. Method for increasing the performance of electronic equipment comprising at least one computing processor and at least one electronic memory, suited to be placed on-board a moving carrier, **characterised in that** it comprises an initial step of memorising (90) in said electronic memory of the electronic equipment a map (20, 80) of levels of operation determined based on at least one parameter that is representative of a condition of use of the equipment, the cartography distinguishing areas having an associated level of operation in a space of parameters representative of conditions of use of said equipment, the levels of operation comprising a nominal level of operation and at least one level of operation deteriorated with respect to the nominal level of operation or improved with respect to the nominal level of operation, and steps, executed by a processor of the equipment, consisting of:
- receiving (94) at least one parameter value that is representative of a condition of use of the equipment;
- determining (96) a level of operation of said equipment, based on said stored map (20, 80) and on said at least one parameter value that is representative of a condition of use of the equipment;
- transmitting (100) an alert if the level of operation determined is a deteriorated level of operation,
the method further comprising a step of obtaining and applying (102) a set of setup parameters (22) of the equipment that are associated with the level of operation determined.

7. Method according to claim 6, comprising transmitting (100) information indicating at least one setup parameter allowing the equipment to be operated at a lower level of operation than the improved level of operation if the level of operation determined is an improved level of operation.

8. Method according to any of claims 6 to 7, wherein several parameters that are representative of conditions of use define the map (20, 80), and wherein the step of receiving comprises receiving predicted position information in relation to a scheduled itinerary and an estimated parameter value that is representative of a condition of use associated with the scheduled itinerary for the equipment, and wherein, following the transmission of an alert, a change is made to the itinerary so as to avoid an itinerary traversing an area of the map corresponding to a deteriorated level of operation.

9. Method according to any of claims 6 to 8, comprising a step of receiving (90) a map of levels of operation obtained by a calculating system suited for mass data processing.

10. Method according to any of claims 6 to 9, wherein the equipment belongs to a equipment family, wherein the map (20, 80) is obtained (76) in an initial step by analysis and processing (72, 74) of data comprising operation/malfunction data (21) and data collected from sensors (50, 52) by at least one piece of equipment of the equipment family.

11. Method according to claim 10, wherein the data used in the step of analysis and processing further comprise additional environmental data comprising meteorological data, and/or geographical data, and/or radio environment data.
